# EUROPEAN PATENT SPECIFICATION

(11) **EP 4 368 861 B1**
(45) Date of publication and mention of the grant of the patent: **03.09.2025**
(21) Application number: 22837007.8
(22) Date of filing: 07.07.2022
(51) Int. Cl.: F16K 1/36, F16K 1/32, F16K 27/02, F16K 27/08, F16K 31/06, F16K 31/40

(54) **ELECTROMAGNETIC VALVE AND AIR CONDITIONING SYSTEM PROVIDED WITH SAME**
ELEKTROMAGNETISCHES VENTIL UND DAMIT AUSGESTATTETES KLIMATISIERUNGSSYSTEM
SOUPAPE ÉLECTROMAGNÉTIQUE ET SYSTÈME DE CLIMATISATION DOTÉ DE CETTE DERNIÈRE

(30) Priority: 07.07.2021 CN 202121564556 U
(43) Date of publication of application: 15.05.2024
(73) Proprietor: Zhejiang Dunan Artificial Environment Co., Ltd., Shaoxing Zhejiang 311835 (CN)
(72) Inventor: TIAN, Peng, Shaoxing, Zhejiang 311835 (CN); ZHANG, Lian, Shaoxing, Zhejiang 311835 (CN); MA, Xiaohong, Shaoxing, Zhejiang 311835 (CN)
(74) Representative: Petraz, Gilberto Luigi
(86) International application number: PCT/CN2022/104311
(87) International publication number: WO 2023/280262

(56) References cited:
- CN-A- 108 087 605
- CN-A- 112 303 317
- CN-U- 208 982 685
- CN-U- 209 725 387
- CN-U- 211 693 533
- CN-U- 215 980 869
- GB-A- 1 571 875

## Description

### CROSS-REFERENCE TO RELATED APPLICATIONS

This application claims priority to Chinese patent application No. 202121564556.5, filed on July 7, 2021, and titled "ELECTROMAGNETIC VALVE AND AIR CONDITIONING SYSTEM PROVIDED WITH SAME".

### TECHNICAL FIELD

The present invention relates to the field of refrigeration technology, and in particular, to an electromagnetic valve and an air conditioning system provided with same.

### BACKGROUND

An electromagnetic valve is industrial equipment controlled by electromagnetism and serves as a fundamental component for automating fluid control. The electromagnetic valve is an actuator, and its type is not limited to a hydraulic actuator, a pneumatic actuator and so on. The electromagnetic valve is used to adjust a direction, a flow, a speed and other parameters of medium in an industrial control system. The electromagnetic valve can cooperate with different circuits to achieve an expected control, and can ensure precision and flexibility in control.

In the related art, the electromagnetic valve often suffers from leakage due to inadequate sealing between a valve bonnet and a valve seat, thus affecting a normal operation of the electromagnetic valve.

CN 209725387 U discloses a normally closed electromagnetic valve, according to the preamble of claim 1, including a valve body, a valve bonnet assembly, a coil assembly, a washer, a screw, a valve core assembly, and a moving iron core assembly. The valve body is connected to the valve cover assembly by threads. The valve bonnet assembly includes a valve bonnet, a sleeve, a static iron core, an iron core spring, and an O-ring.

CN 112303317 A discloses a pilot operated electromagnetic valve including a valve body component, a pilot valve component, and a piston component. The piston component includes a first piston body, a second piston body, and an elastic member. The first piston body includes a receiving chamber, and the second piston body is at least partially provided in the receiving chamber. One end of the elastic member abuts against the first piston body along an axis of the elastic member, and the other end of the elastic member abuts against the second piston body along the axis of the elastic member. The second piston body can move axially relative to the first piston body, and the first piston body can move axially relative to the valve body component.

CN 211693533 U discloses an electromagnetic valve including a valve seat, a valve cover located on the valve seat, and an electromagnetic component. The valve cover is in fit with the valve seat to form a valve chamber. The valve seat is provided with a first interface, a second interface, and a medium channel. The first interface is in communication to the valve chamber via the medium channel, and the second interface is in communication to the valve chamber. The electromagnetic component includes a movable iron core, and an end of the movable iron core is connected to a sealing element. The movable iron core is provided with a pressure relief hole on the part connected to the sealing element, and an end of the pressure relief hole extends to the position where the sealing element is located.

### SUMMARY

The invention is set out in the appended set of claims. According to various embodiments of the present invention, an electromagnetic valve with high sealing performance is provided.

The present invention provides the following technical scheme.

An electromagnetic valve is provided. The electromagnetic valve includes a valve bonnet and a valve seat. The valve seat is provided with a mounting groove, a part of the valve bonnet is arranged in the mounting groove. The valve bonnet includes a large-diameter section and a small-diameter section, the small-diameter section extends into the mounting groove and is affixed to a groove wall of the mounting groove, and the large-diameter section abuts against the valve seat. A first sealing surface is formed by the large-diameter section abutting against the valve seat, and a second sealing surface is formed by the small-diameter section is affixed to the groove wall of the mounting groove. The valve bonnet and the valve seat are connected in a hard sealing connection manner at the first sealing surface, and the valve bonnet and the valve seat are connected in a soft sealing connection manner at the second sealing surface.

Furthermore, the large-diameter section is provided with a first abutting surface, a second abutting surface is provided at an abutting position of the valve seat and the large-diameter section; the first sealing surface is defined by the first abutting surface and the second abutting surface being in contact with and combined with each other, and the first abutting surface and the second abutting surface are in contact with and combined with each other to form the hard sealing connection manner.

Furthermore, a step portion protruding towards the second abutting surface is arranged on the first abutting surface, a concave portion matched with the step portion is arranged on the second abutting surface, and the concave portion is sunken towards a direction away from the first abutting surface, and when the first abutting surface is affixed to the second abutting surface, the step portion and the concave portion are tightly matched.

Furthermore, an annular protrusion protruding towards the second abutting surface is arranged on the first abutting surface, and when the first abutting surface is affixed to the second abutting surface, the annular protrusion is capable of being pressed and embedded in the second abutting surface.

Furthermore, a hardness of a material of the valve bonnet is greater than a hardness of a material of the valve seat.

In some embodiments, a cross-sectional shape of the annular protrusion is a triangular or a circular arc.

In some embodiments, an outer wall of the small-diameter section is provided with a third abutting surface, and an inner wall of the valve seat is provided with a fourth abutting surface, and a second sealing surface is formed by the third abutting surface and the fourth abutting surface being in contact and combined with each other; the third abutting surface is provided with a sealing groove, a sealing ring is disposed in the sealing groove, and the sealing ring is located in the sealing groove and extruded on the fourth bonding surface.

In some embodiments, the electromagnetic valve further includes a pilot valve component, and the pilot valve component is fixed disposed in the valve bonnet. The pilot valve component includes a valve sleeve, the valve sleeve is provided with a valve cavity, the valve seat is provided with a valve port which is in communication with the valve cavity. A piston unit is arranged in the valve sleeve, and the piston unit is capable of moving along an axial direction of the valve sleeve in the valve cavity to open/close the valve port.

In some embodiments, the piston unit includes a movable iron core, a fixed iron core, and an elastic member, and both ends of the elastic member are in contact with the movable iron core and the fixed iron core, the movable iron core is capable of moving in a direction towards or away from the fixed iron core under an action of elastic force and an action of electromagnetic force of the elastic member to open/close the valve port.

The present invention further provides the following technical scheme:
an air conditioning system including the above electromagnetic valve is provided.

Details of one or more embodiments of this application are presented in the attached drawings and descriptions below. And other features, purposes and advantages of this application will become apparent from the description, drawings and claims.

### BRIEF DESCRIPTION OF THE DRAWINGS

For a better description and illustration of embodiments and/or examples of those disclosures disclosed herein, reference may be made to one or more attached drawings. Additional details or examples used to describe the drawings should not be considered as limiting the scope of any of the disclosed disclosures, currently described embodiments and/or examples, and currently understood best modes of these disclosures.
FIG. 1 is a schematic view of an electromagnetic valve according to one or more embodiments.
FIG. 2 is an enlarged view of portion A in FIG. 1 according to one embodiment.
FIG. 3 is an enlarged view of portion A in FIG. 1 according to another embodiment.

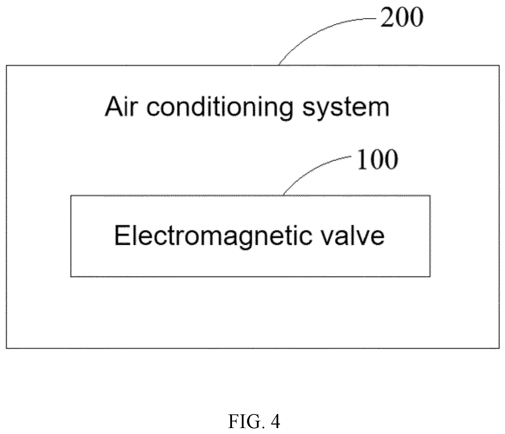

FIG. 4 is a schematic view of an electromagnetic valve and an air conditioning system including the electromagnetic valve according to one or more embodiments.

Reference signs are as follows:
100 represents an electromagnetic valve; 10 represents a valve bonnet; 11 represents a large-diameter section; 12 represents a small-diameter section; 13 represents a mounting hole; 20 represents a valve seat; 21 represents a mounting groove; 22 represents a valve port; 30 represents a first sealing surface; 31 represents a first abutting surface; 311 represents a step portion; 312 represents an annular protrusion; 32 represents a second abutting surface; 321 represents a concave portion; 40 represents a second sealing surface; 41 represents a third abutting surface; 411 represents a sealing groove; 42 represents a fourth abutting surface; 43 represents a sealing ring; 50 represents a pilot valve component; 51 represents a valve sleeve; 511 represents a valve cavity; 52 represents a piston unit; 521 represents a movable iron core; 522 represents a fixed iron core; 523 represents an elastic member; 524 represents a piston; and 200 represents an air conditioning system.

### DETAILED DESCRIPTION

The technical scheme in the embodiment of this application will be described clearly and completely with the attached drawings. Obviously, the described embodiment is only a part of the embodiment of this application, not the whole embodiment. Based on the embodiments in this application, all other embodiments obtained by ordinary technicians in this field without creative work, and within the scope of the appended claims, belong to the protection scope of this application.

It should be noted that when a component is considered to be "mounted" on another component, it can be directly on the other component or there can be a component in the middle. When a component is considered to be "set on" another component, it can be directly set on another component or there may be intervening components at the same time. When a component is considered to be "fixed" to another component, it can be directly fixed to another component or there may be intervening components at the same time.

Unless otherwise defined, all technical and scientific terms used herein have the same meaning as commonly understood by those skilled in the technical field of this application. The terminology used herein in the specification of this application is only for the purpose of describing specific embodiments, and is not intended to limit this application. As used herein, the term "or/and" includes any and all combinations of one or more related listed items.

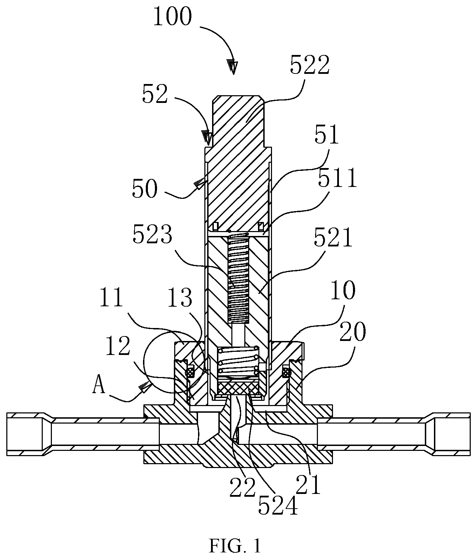

Referring to FIG. 1 to FIG. 3, the present invention provides an electromagnetic valve 100, which is installed in an air conditioning system and used for controlling a communication of pipelines or breaking off a communication of pipelines, thus realizing a bidirectional circulation of a refrigerants

In the related art, a traditional electromagnetic valve often suffers from leakage due to inadequate sealing between a valve bonnet and a valve seat, thus affecting a normal operation of the electromagnetic valve.

In order to solve the problem of leakage caused by inadequate sealing in the traditional electromagnetic valve, the present invention provides an electromagnetic valve 100, and the electromagnetic valve 100 includes a valve bonnet 10 and a valve seat 20. The valve seat 20 is provided with a mounting groove 21, and a part of the valve bonnet 10 is arranged in the mounting groove 21. The valve bonnet 10 includes a large-diameter section 11 and a small-diameter section 12, the small-diameter section12 extends into the mounting groove 21 and is affixed to a groove wall of the mounting groove 21, and the large-diameter section 11 abuts against the valve seat 20. A first sealing surface 30 is formed by the large-diameter section 11 abutting against the valve seat 20, and the small-diameter section 12 is affixed to the groove wall of the mounting groove 21 to form a second sealing surface 40. The valve bonnet 10 and the valve seat 20 are connected in a hard sealing connection manner at the first sealing surface 30, and the valve bonnet 10 and the valve seat 20 are connected in a soft sealing connection manner at the second sealing surface 40. For example, "a hard sealing connection manner" can mean that both sealing surfaces forming a sealed connection are made of metal materials or other hard materials, and "a soft sealing connection" can mean that one sealing surface is made of metal materials or other hard materials, and the other sealing surface is made of elastic nonmetal materials.

The electromagnetic valve 100 provided by the present invention can realize a hard sealing at the first sealing surface 30 by making the valve bonnet 10 and the valve seat 20, and realize a soft sealing at the second sealing surface 40, so that an installation gap between the valve bonnet 10 and the valve seat 20 can be double sealed including hard seal and soft seal, which greatly improves the sealing effect, reduces the leakage rate, and makes the electromagnetic valve 100 operate stably and reliably.

Referring to FIG. 1, the electromagnetic valve 100 includes a pilot valve component 50, a valve bonnet 10, and a valve seat 20. The valve bonnet 10 is provided with a mounting hole 13. A part of the pilot valve component 50 is installed in the mounting hole 13 and fixedly connected with the valve bonnet 10. And the valve seat 20 is provided with a mounting groove 21. The pilot valve component 50 and the valve bonnet 10 are installed in the mounting groove 21, thus realizing the installation connection among the pilot valve component 50, the valve bonnet 10 and the valve seat 20.

Furthermore, the pilot valve component 50 includes a valve sleeve 51. The valve sleeve 51 extends into the mounting hole 13 and is welded to the valve bonnet 10. The valve sleeve 51 is provided with a valve cavity 511, the valve seat 20 is provided with a valve port 22 which is in communication with the valve cavity 511. A piston unit 52 is arranged in the valve sleeve 51, and the piston unit 52 is capable of moving along an axial direction of the valve sleeve 51 in the valve cavity 511 to open/close the valve port 22.

Furthermore, the piston unit 52 includes a movable iron core 521, a fixed iron core 522, and an elastic member 523. The fixed iron core 522 is fixedly arranged at one end of the valve sleeve 51 away from the valve port 22, and the movable iron core 521 is located at one end of the valve sleeve 51 adj acent to the valve port 22. The elastic member 523 is connected between the movable iron core 521 and the fixed iron core 522. The movable iron core 521 can be driven by the elastic member 523 to move along a direction towards/away from the fixed iron core 522.

In some embodiments, the elastic member 523 is a spring. Of course, in other embodiments, the elastic member 523 can also choose other types of elastic structures, which are not limited here.

Furthermore, an end of the movable iron core 521 adjacent to the valve port 22 is connected with a piston 524. With a movement of the movable iron core 521 in the valve sleeve 51 along the axial direction of the valve sleeve 51, the piston 524 can abut against the valve port 22 to seal the valve port 22 or separate from the valve port 22 to open the valve port 22, thus realizing the communication or breaking off the communication of the pipelines.

The working principle of the electromagnetic valve 100 provided by the present invention is that when an electromagnetic coil sleeved outside the valve sleeve 51 is powered on, the movable iron core 521 moves towards the fixed iron core 522 and overcomes an elastic force of the elastic member 523, at this time, the piston 524 is driven by the movable iron core 521 to separate from the valve port 22, so that the valve port 22 can be opened, and the electromagnetic valve 100 realizes the communication of an inlet pipeline and an outlet pipeline. When the electromagnetic coil sleeved outside the valve sleeve 51 is powered off, the movable iron core 521 moves away from the fixed iron core 522 under an elastic restoring force of the elastic member 523, at this time, the piston 524 is driven by the movable iron core 521 to abut against the valve port 22, and the valve port 22 is sealed by the piston 524, so that the electromagnetic valve 100 can break off an communication between the inlet and outlet pipelines.

Furthermore, the valve bonnet 10 includes a large-diameter section 11 and a small-diameter section 12 which are connected with each other. A diameter of the large-diameter section 11 is larger than that of the small-diameter section 12. The large-diameter section 11 is located at one end of the valve bonnet 10 adjacent to the pilot valve component 50. The small-diameter section 12 is located at one end of the valve bonnet 10 adjacent to the valve seat 20, and the large-diameter section 11 and the small-diameter section 12 are integrally formed to form the valve bonnet 10.

Specifically, when the valve bonnet 10 is installed in the valve seat 20, the small-diameter section 12 extends into the mounting groove 21 and is affixed to the groove wall of the mounting groove 21, so that the large-diameter section 11 can abut against the valve seat 20. By providing the large-diameter section 11, when the valve bonnet 10 is installed in the valve seat 20, the valve bonnet 10 can abut against the valve seat 20 to form a limit, so as to prevent the valve bonnet 10 from excessively extending into the valve seat 20, and further avoid causing structural fracture.

Furthermore, the large-diameter section 11 abuts against the valve seat 20 to form a first sealing surface 30, and the small-diameter section 12 is affixed to the groove wall of the mounting groove 21 to form a second sealing surface 40. The valve bonnet 10 and the valve seat 20 are connected in a hard sealing connection manner at the first sealing surface 30, and the valve bonnet 10 and the valve seat 20 are connected in a soft sealing connection manner at the second sealing surface 40.

Specifically, the large-diameter section 11 is provided with a first abutting surface 31, and the valve seat 20 is provided with a second abutting surface 32 abutting against the large-diameter section 11. The first abutting surface 31 and the second abutting surface 32 are in contact with and combined with each other to form the first sealing surface 30, and the first abutting surface 31 and the second abutting surface 32 are in contact with and combined with each other to form the hard sealing connection manner, so that both a sealing performance and a sealing strength can be improved.

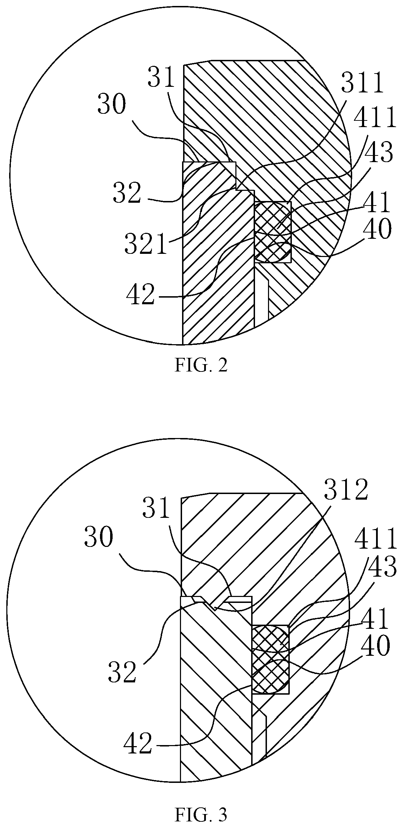

Referring to FIG. 2, in an embodiment, a step portion 311 protruding towards the second abutting surface 32 is arranged on the first abutting surface 31. A concave portion 321 matched with the step portion 311 is arranged on the second abutting surface 32, and the concave portion 321 is sunken towards a direction away from the first abutting surface 31, when the first abutting surface 31 is affixed to the second abutting surface 32, the step portion 311 and the concave portion 321 are tightly matched, so that another manner of a hard sealing is realized at the first sealing surface 30.

Compared with the first sealing surface 30 not provided with the step portion, the first sealing surface 30 provided with the step portion 311 has added another barrier to prevent an external medium from penetrating. That is to say, assuming that the first sealing surface 30 without the step portion is horizontal, the first sealing surface 30 with the step portion 311 is provided with a vertical surface on the basis of horizontal surface. If a small amount of medium still leaks out from the first sealing surface 30, the medium will be blocked from leaking from the horizontal surface to the vertical surface at the step portion 311. Therefore, the arrangement of the step portion 311 can further enhance the sealing performance of the hard seal and further reduce a leakage possibility.

It should be noted that the step portion 311 is not limited to being arrange on the first abutting surface 31. In other embodiments, the step portion 311 can also be arranged on the second abutting surface 32, and at this time, the concave portion 321 is correspondingly arranged on the first abutting surface 31, so long as the sealing performance can be improved, which is not limited here.

Of course, in this embodiment, a number of the step portion 311 can be adjusted according to a structure or a different requirements, and the step portion 31 can be arranged to one, two, three or even more, which is not limited here.

Referring to FIG. 3, furthermore, an annular protrusion 312 protruding towards the second abutting surface 32 is arranged on the first abutting surface 31, when the first abutting surface 31 is affixed to the second abutting surface 32, the annular protrusion 312 is capable of being pressed and embedded in the second abutting surface 32. In this way, a sealing performance of the valve bonnet 10 and the valve seat 20 at the first sealing surface 30 can be further enhanced.

Specifically, a width at a bottom of the annular protrusion 312 is greater than that at a top of the annular protrusion 312, and the width of the annular protrusion 312 gradually increases from the top to the bottom. In this way, a face-to-face seal at the first sealing surface 30 becomes a line-to-face seal, and the annular protrusion 312 having a top with a smaller width can increase a contact stress by reducing a contact area, thus improving a reliability of the hard seal.

In this embodiment, the annular protrusion 312 is not limited to be arranged on the first abutting surface 31. In other embodiments, the annular protrusion 312 can also be arranged on the second abutting surface 32, so long as the sealing performance can be improved, which is not limited here.

It is worth noting that whether the annular protrusion 312 is disposed on the first abutting surface 31 or the second abutting surface 32, it is required that a hardness of a material of the valve bonnet 10 with the annual projection 312 or the valve seat 20 with the annual projection 312 is greater than that of the valve seat 20 without the annual projection or the valve bonnet 10 without the annual projection. In this way, the annular protrusion 312 can have elastic-plastic deformation better, and then it is easier to be embedded in the valve seat 20 or the valve bonnet 10.

In this embodiment, the valve bonnet 10 is made of a hard stainless steel material, and the valve seat 20 is made of aluminum alloy material. Of course, in other embodiments, the valve bonnet 10 and the valve seat 20 can also be made of other metal materials such as copper material, which is not limited here.

Furthermore, a cross section of the annular protrusion 312 is in a triangular, circular or trapezoidal shape, as long as a width of a bottom of the annual projection 312 can be ensured to be greater than a width of a top of the annual projection 312, so as to facilitate an embedding of the annual projection 312 into the valve seat 20 or the valve bonnet 10. The shape of a cross section of the annual projection 312 is not limited here.

In this embodiment, a number of the annular protrusions 312 can be one or more. In an embodiment, the number of the annular protrusions 312 is two or three. Although theoretically speaking, an installation number of the annular protrusions 312 is directly proportional to the sealing reliability, however, due to too many the annular protrusions 312, a machining errors of the annular protrusions 312 higher than the first abutting surface 31 will be accumulated more. Furthermore, a sealing effect of each of the annular protrusions 312 is not exactly the same. At the same time, the more the number of the annular protrusions 312, a larger space occupied by the annular protrusions 312, and a greater a thread pre-tightening force required by the annular protrusions 312 to ensure an elastic-plastic deformation is, which will make an overall structure too bloated. Therefore, when a number of the annular protrusions 312 is two or three, it can meet requirement based on multiple factors such as a sealing effect, a structural size and a machining accuracy at the same time.

Furthermore, an outer wall of the small-diameter section 12 is provided with a third abutting surface 41, and an inner wall of the valve seat 20 is provided with a fourth abutting surface 42. The third abutting surface 41 and the fourth abutting surface 42 are combined and affixed to each other to form the second sealing surface 40. A sealing groove 411 is arranged on the third abutting surface 41, and a sealing ring 43 is installed in the sealing groove 411 and extruded on the fourth abutting surface 42. In this way, a second soft sealing between the valve bonnet 10 and the valve seat 20 is realized, which enhances the sealing performance and reduces the leakage possibility.

It should be noted that on a basis of a first hard sealing at the first sealing surface 30, a second soft sealing at the second sealing surface 40 can play a role of backup and protective seal. When the hard sealing formed by the annular protrusion 312 fails, the sealing between the valve seat 20 and the valve bonnet 10 can still maintain by the second soft sealing. Similarly, if the sealing ring 43 is out of work in extreme low or high temperature environments, the first hard sealing between the valve seat 20 and the valve bonnet 10 can still maintain, thus improving the sealing reliability between the valve bonnet 10 and the valve seat 20.

Furthermore, the sealing ring 43 can be in an O-ring shape and it is not limited to this. In other embodiments, other sealing structures can also be selected, as long as sealing can be realized.

In this embodiment, an arrangement position of the sealing groove 411 is not limited to the third abutting surface 41. In other embodiments, the sealing groove 411 can be arranged on the fourth abutting surface 42. Alternatively, both the third abutting surface 41 and the fourth abutting surface 42 are provided with the sealing groove 411. In other words, the arrangement position of the sealing groove 411 is not limited, as long as the sealing performance can be improved.

The present invention further provides an air conditioning system 200 including the above electromagnetic valve 100 provided.

In the electromagnetic valve 100 provided by the present invention, it can realize a hard sealing at the first sealing surface 30 and a soft sealing at the second sealing surface 40 between the valve bonnet 10 and the valve seat 20, so that it can achieve double sealing with hard seal and soft seal at an installation gap between the valve bonnet 10 and the valve seat 20, which greatly improves the sealing effect, reduces the leakage possibility, and makes the electromagnetic valve 100 operate stably and reliably.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the appended claims.

## Claims

1. An electromagnetic valve (100), comprising a valve bonnet (10) and a valve seat (20), wherein the valve seat (20) is provided with a mounting groove, a part of the valve bonnet (10) is arranged in the mounting groove;
wherein the valve bonnet (10) comprises a large-diameter section (11) and a small-diameter section (12), the small-diameter section (12) extends into the mounting groove (21) and is affixed to a groove wall of the mounting groove (21), and the large-diameter section (11) abuts against the valve seat (20);
wherein a first sealing surface (30) is formed by the large-diameter section (11) abutting against the valve seat (20), and a second sealing surface (40) is formed by the small-diameter section (12) being affixed to the groove wall of the mounting groove (21); the valve bonnet (10) and the valve seat (20) are connected in a hard sealing connection manner at the first sealing surface (30), and the valve bonnet (10) and the valve seat (20) are connected in a soft sealing connection manner at the second sealing surface (40); charaterized in that
the large-diameter section (11) is provided with a first abutting surface(31), a second abutting surface (32) is provided at an abutting position of the valve seat (20) and the large-diameter section (11);
a step portion (311) protruding towards the second abutting surface (32) is arranged on the first abutting surface (31), a concave portion (321) matched with the step portion (311) is arranged on the second abutting surface (32), and the concave portion (321) is sunken towards a direction away from the first abutting surface (31), and when the first abutting surface (31) is affixed to the second abutting surface (32), the step portion (311) and the concave portion (321) are tightly matched;
an annular protrusion (312) protruding towards the second abutting surface (32) is arranged on the first abutting surface (31), and when the first abutting surface (31) is affixed to the second abutting surface (32), the annular protrusion (312) is capable of being pressed and embedded in the second abutting surface (32);
a hardness of a material of the valve bonnet (10) is greater than a hardness of a material of the valve seat (20).

2. The electromagnetic valve of claim 1, wherein the first sealing surface (30) is defined by the first abutting surface (31) and the second abutting surface (32) being in contact with and combined with each other, and the first abutting surface (31) and the second abutting surface (32) are in contact with and combined with each other to form the hard sealing connection manner.

3. The electromagnetic valve (100) of claim 1, wherein a cross-sectional shape of the annular protrusion (312) is a triangular or a circular arc.

4. The electromagnetic valve (100) of claim 1, wherein an outer wall of the small-diameter section (12) is provided with a third abutting surface (41), and an inner wall of the valve seat (20) is provided with a fourth abutting surface (42), and a second sealing surface (40) is formed by the third abutting surface (41) and the fourth abutting surface (42) being affixed to each other.

5. The electromagnetic valve (100) of claim 1, further comprising a pilot valve component (50), wherein the pilot valve component (50) is fixed in the valve bonnet (10), the pilot valve component (50) comprises a valve sleeve (51), the valve sleeve (51) is provided with a valve cavity (511), the valve seat (20) is provided with a valve port (22) which is in communication with the valve cavity (511);
a piston unit (52) is arranged in the valve sleeve (51), and the piston unit (52) is capable of moving along an axial direction of the valve sleeve (51) in the valve cavity (511) to open/close the valve port (22).

6. The electromagnetic valve (100) of claim 5, wherein the piston unit (52) comprises a movable iron core (521), a fixed iron core (522), and an elastic member (523), and both ends of the elastic member (523) are in contact with the movable iron core (521) and the fixed iron core (522), the movable iron core (521) is capable of moving in a direction towards or away from the fixed iron core (522) under an action of elastic force and an action of electromagnetic force of the elastic member (523) to open/close the valve port (22).

7. An air conditioning system (200), comprising the electromagnetic valve (100) of any one of claims 1 to 6.

## Patentansprüche

1. Elektromagnetisches Ventil (100), umfassend eine Ventilhaube (10) und einen Ventilsitz (20), worin der Ventilsitz (20) mit einer Montagenut versehen ist, ein Teil der Ventilhaube (10) in der Montagenut angeordnet ist;
worin die Ventilhaube (10) einen Abschnitt mit großem Durchmesser (11) und einen Abschnitt mit kleinem Durchmesser (12) umfasst, der Abschnitt mit kleinem Durchmesser (12) sich in die Montagenut (21) hinein erstreckt und an einer Nutwand der Montagenut (21) angebracht ist, und der Abschnitt mit großem Durchmesser (11) gegen den Ventilsitz (20) anstößt;
worin eine erste Abdichtungsfläche (30) vom Abschnitt mit großem Durchmesser (11), der gegen den Ventilsitz (20) anstößt, ausgebildet ist, und eine zweite Abdichtungsfläche (40) vom Abschnitt mit kleinem Durchmesser (12), der an der Nutwand der Montagenut (21) angebracht ist, ausgebildet ist; die Ventilhaube (10) und der Ventilsitz (20) in einer harten Dichtungsverbindungsweise an der ersten Abdichtungsfläche (30) verbunden sind, und die Ventilhaube (10) und der Ventilsitz (20) in einer weichen Dichtungsverbindungsweise an der zweiten Abdichtungsfläche (40) verbunden sind; **dadurch gekennzeichnet, dass**
der Abschnitt mit großem Durchmesser (11) mit einer ersten Anstoßfläche (31) versehen ist, eine zweite Anstoßfläche (32) an einer Anstoßposition des Ventilsitzes (20) und des Abschnitts mit großem Durchmesser (11) vorgesehen ist;
ein Stufenabschnitt (311), der zur zweiten Anstoßfläche (32) hin vorspringt, an der ersten Anstoßfläche (31) angeordnet ist, ein konkaver Abschnitt (321), der zum Stufenabschnitt (311) passt, an der zweiten Anstoßfläche (32) angeordnet ist, und der konkave Abschnitt (321) zu einer Richtung hin weg von der ersten Anstoßfläche (31) versenkt ist, und wenn die erste Anstoßfläche (31) an der zweiten Anstoßfläche (32) angebracht ist, der Stufenabschnitt (311) und der konkave Abschnitt (321) fest zusammenpassend sind;
ein ringförmiger Vorsprung (312), der zur zweiten Anstoßfläche (32) hin vorspringt, an der ersten Anstoßfläche (31) angeordnet ist, und wenn die erste Anstoßfläche (31) an der zweiten Anstoßfläche (32) angebracht ist, der ringförmige Vorsprung (312) in der zweiten Anstoßfläche (32) gedrückt und eingeschlossen werden kann;
eine Härte eines Materials der Ventilhaube (10) größer ist als eine Härte eines Materials des Ventilsitzes (20).

2. Elektromagnetisches Ventil nach Anspruch 1, worin die erste Abdichtungsfläche (30) von der ersten Anstoßfläche (31) und der zweiten Anstoßfläche (32) definiert ist, die in Kontakt miteinander und miteinander kombiniert sind, und die erste Anstoßfläche (31) und die zweite Anstoßfläche (32) in Kontakt miteinander und miteinander kombiniert sind, um die harte Dichtungsverbindungsweise zu bilden.

3. Elektromagnetisches Ventil (100) nach Anspruch 1, worin eine Querschnittsform des ringförmigen Vorsprungs (312) ein dreieckiger oder ein kreisförmiger Bogen ist.

4. Elektromagnetisches Ventil (100) nach Anspruch 1, worin eine Außenwand des Abschnitts mit kleinem Durchmesser (12) mit einer dritten Anstoßfläche (41) versehen ist, und eine Innenwand des Ventilsitzes (20) mit einer vierten Anstoßfläche (42) versehen ist, und eine zweite Abdichtungsfläche (40) von der dritten Anstoßfläche (41) und der vierten Anstoßfläche (42) ausgebildet ist, die einander angebracht sind.

5. Elektromagnetisches Ventil (100) nach Anspruch 1, ferner umfassend einen Pilotventilbestandteil (50), worin der Pilotventilbestandteil (50) in der Ventilhaube (10) fixiert ist, der Pilotventilbestandteil (50) eine Ventilhülse (51) umfasst, die Ventilhülse (51) mit einem Ventilhohlraum (511) versehen ist, der Ventilsitz (20) mit einer Ventilöffnung (22) versehen ist, die mit dem Ventilhohlraum (511) in Kommunikation steht;
eine Kolbeneinheit (52) in der Ventilhülse (51) angeordnet ist, und die Kolbeneinheit (52) sich entlang einer axialen Richtung der Ventilhülse (51) im Ventilhohlraum (511) bewegt, um die Ventilöffnung (22) zu öffnen/zu schließen.

6. Elektromagnetisches Ventil (100) nach Anspruch 5, worin die Kolbeneinheit (52) einen beweglichen Eisenkern (521), einen festen Eisenkern (522) und ein elastisches Element (523) umfasst, und beide Enden des elastischen Elementes (523) mit dem beweglichen Eisenkern (521) und dem festen Eisenkern (522) im Kontakt stehen, der bewegliche Eisenkern (521) sich in einer Richtung zum oder weg vom festen Eisenkern (522) unter einer Wirkung von elastischer Kraft und einer Wirkung von elektromagnetischer Kraft des elastischen Elementes (523) bewegen kann, um die Ventilöffnung (22) zu öffnen/zu schließen.

7. Klimatisierungssystem (200), umfassend das elektromagnetische Ventil (100) nach einem der Ansprüche 1 bis 6.

## Revendications

1. Électrovanne (100), comprenant un chapeau de vanne (10) et un siège de vanne (20), dans laquelle le siège de vanne (20) est muni d'une rainure de montage, une partie du chapeau de vanne (10) est agencée dans la rainure de montage ;
dans laquelle le chapeau de vanne (10) comprend une section de grand diamètre (11) et une section de petit diamètre (12), la section de petit diamètre (12) s'étend dans la rainure de montage (21) et est fixée à une paroi de rainure de la rainure de montage (21), et la section de grand diamètre (11) vient en butée contre le siège de vanne (20) ;
dans laquelle une première surface d'étanchéité (30) est formée par la section de grand diamètre (11) en butée contre le siège de vanne (20), et une seconde surface d'étanchéité (40) est formée par la section de petit diamètre (12) étant fixée à la paroi de rainure de la rainure de montage (21) ; le chapeau de vanne (10) et le siège de vanne (20) sont reliés de manière étanche et rigide au niveau de la première surface d'étanchéité (30), et le chapeau de vanne (10) et le siège de vanne (20) sont reliés de manière étanche et souple au niveau de la seconde surface d'étanchéité (40) ; **caractérisée en ce que**
la section de grand diamètre (11) est munie d'une première surface de butée (31), une deuxième surface de butée (32) est disposée en une position de butée du siège de vanne (20) et de la section de grand diamètre (11) ; une partie étagée (311) faisant saillie vers la deuxième surface de butée (32) est agencée sur la première surface de butée (31), une partie concave (321) correspond à la partie étagée (311) est agencée sur la deuxième surface de butée (32), et la partie concave (321) est enfoncée vers une direction s'éloignant de la première surface de butée (31), et lorsque la première surface de butée (31) est fixée à la deuxième surface de butée (32), la partie étagée (311) et la partie concave (321) correspondent parfaitement ;
une saillie annulaire (312) faisant saillie vers la deuxième surface de butée (32) est agencée sur la première surface de butée (31), et lorsque la première surface de butée (31) est fixée à la deuxième surface de butée (32), la saillie annulaire (312) peut être pressée et encastrée dans la deuxième surface de butée (32) ;
une dureté d'un matériau du chapeau de vanne (10) est supérieure à une dureté d'un matériau du siège de vanne (20).

2. Électrovanne selon la revendication 1, dans laquelle la première surface d'étanchéité (30) est définie par le fait que la première surface de butée (31) et la deuxième surface de butée (32) sont en contact l'une avec l'autre et combinées l'une à l'autre, et la première surface de butée (31) et la deuxième surface de butée (32) sont en contact l'une avec l'autre et combinées l'une à l'autre pour former la liaison étanche et rigide.

3. Électrovanne (100) selon la revendication 1, dans laquelle une forme de section transversale de la saillie annulaire (312) est un arc triangulaire ou circulaire.

4. Électrovanne (100) selon la revendication 1, dans laquelle une paroi externe de la section de petit diamètre (12) est munie d'une troisième surface de butée (41), et une paroi interne du siège de vanne (20) est munie d'une quatrième surface de butée (42), et une seconde surface d'étanchéité (40) est formée par la troisième surface de butée (41) et la quatrième surface de butée (42) étant fixées l'une à l'autre.

5. Électrovanne (100) selon la revendication 1, comprenant en outre un composant de vanne pilote (50), dans laquelle le composant de vanne pilote (50) est fixé dans le chapeau de vanne (10), le composant de vanne pilote (50) comprend un manchon de vanne (51), le manchon de vanne (51) est muni d'une cavité de vanne (511), le siège de vanne (20) est muni d'un orifice de vanne (22) qui est en communication avec la cavité de vanne (511) ;
une unité piston (52) est agencée dans le manchon de vanne (51), et l'unité piston (52) est apte à se déplacer le long d'une direction axiale du manchon de vanne (51) dans la cavité de vanne (511) pour ouvrir/fermer l'orifice de vanne (22).

6. Électrovanne (100) selon la revendication 5, dans laquelle l'unité piston (52) comprend un noyau de fer mobile (521), un noyau de fer fixe (522) et un élément élastique (523), et les deux extrémités de l'élément élastique (523) sont en contact avec le noyau de fer mobile (521) et le noyau de fer fixe (522), le noyau de fer mobile (521) est apte à se déplacer dans une direction s'approchant ou s'écartant du noyau de fer fixe (522) sous une action de force élastique et une action de force électromagnétique de l'élément élastique (523) pour ouvrir/fermer l'orifice de vanne (22).

7. Système de climatisation (200), comprenant la vanne électromagnétique (100) selon l'une quelconque des revendications 1 à 6.
